# EUROPÄISCHE PATENTANMELDUNG

(11) **EP 1 081 779 A1**
(43) Veröffentlichungstag der Anmeldung: **07.03.2001**
(21) Anmeldenummer: 00118127.0
(22) Anmeldetag: 28.08.2000
(51) Int. Cl.: H01M 8/04, F28D 20/02, B60H 1/00, F02N 17/06

(54) **Latentwärmespeicher für Brennstoffzellensysteme**

(30) Priorität: 03.09.1999 DE 19942195
(71) Anmelder: MERCK PATENT GmbH, 64293 Darmstadt (DE)
(72) Erfinder: Heider, Udo, Dr., 64560 Riedstadt (DE); Neuschütz, Mark, Dr., 64295 Darmstadt (DE); Jörissen, Ludwig, Dr., 89231 Neu-Ulm (DE)

(57) **Zusammenfassung**

Die Erfindung betrifft die Verwendung von Latentwärmespeichern in Brennstoffzellensystemen.

Der Latentwärmespeicher wird in einem Brennstoffzellensystem zur Temperierung des Reformers oder für den Verdampfungsprozess des Brennstoffes genutzt.

Ein Latentwärmespeicher Liefert bei zunehmendem Wasserstoffbedarf verzögerungsfrei die zusätzlich im Reformer benötigte Energie und verhindert somit, daß die Temperatur des Reformierungsreaktors durch eine unzulängliche Brennerregelung absinkt.

Im umgekehrten Fall nimmt der Latentwärmespeicher bei sinkendem H₂-Bedarf überschüssige Wärme auf, die von einer verzögerten Brennerregelung herrührt. Bei zu niedriger Temperatur im Reformer ist die Reformierungsreaktion zu langsam, bei zu hohen Temperaturen würde der CO-Gehalt steigen und die Brennstoffzelle vergiften. In Brennstoffzellen können Latentwärmespeicher zur Temperierung in den Gasreiniger integriert werden.

Überraschend wurde gefunden, daß ein Latentwärmespeichersystem in einem Brennstoffzellensystem für die mobile Anwendung wie z.B. im Auto besonders geeignet ist. Automobile müssen innerhalb weniger Sekunden gestartet werden können. Dies kann durch ein Latentwärmespeichersystem zum schnellen Heizen des Reformers ermöglicht werden.

Es wurde gefunden, daß durch die Erhöhung der Brennstoffzugabe der Wärmebedarf der endothermen Prozesse in einer Brennstoffzelle abgedeckt werden kann und daß der Einsatz von Latentwärmespeichern das Überhitzen der Polymerelektrolyte verhindern kann.

## Beschreibung

Die Erfindung betrifft die Anwendung von Latentwärmespeichern in Brennstoffzellensysteme.

Brennstoffzellen gehören zu den aussichtsreichen Systemen für mobile Anwendungen. Ein Wachstumsmarkt ergibt sich durch die weltweit wachsende Nachfrage nach Fahrzeugantrieben, die emissionsfrei oder zumindest emissionsarm sind. Die Brennstoffzelle bietet als Antrieb für Fahrzeuge schon mittelfristig das Potential zur Treibstoff- und CO₂-Einsparung von bis zu 30%. Die wesentlichen Vorteile der Brennstoffzelle liegen in ihrem hohen Wirkungsgrad bei der Energiewandlung, in ihrer Umweltfreundlichkeit durch den geringen Schadstoffausstoß und ihrer Einsatzbreite vom Milliwatt- bis in den Megawattbereich.

In einer Brennstoffzelle reagieren Wasserstoff und Sauerstoff in einer kontrollierten Verbrennung zu Wasser, wobei elektrische Energie unter sehr hohen Wirkungsgraden und ohne Schadstoff-Emissionen erzeugt wird. Der Wasserstoff wird direkt oder indirekt zur Verfügung gestellt. Indirekt kann der Wasserstoff z.B. über einen Reformer aus Methanol oder Benzin bereitgestellt werden.

Zur Aufbereitung von Methanol wird die Dampfreformierung bevorzugt. Die Prozeßtemperatur für die Methanolreformierung beträgt typischerweise um 300°C. Die Dampfreformierung von höheren Alkoholen bzw. Kohlenwasserstoffen erfordert Prozeßtemperaturen von mehr als 700°C. Daher wird für die Aufbereitung von Benzin bevorzugt die autotherme Reformierung oder die partielle Oxidation diskutiert. Bei diesen Temperaturen werden zur Erhöhung der Wasserstoffausbeute nach dem Reformer noch Shiftkonverter verwendet.

Das Gas muß anschließend noch von restlichen CO-Anteilen befreit werden. Dies kann durch selektive Oxidation oder durch eine Gasdiffusionsmembran erfolgen.

Generell liefert die Dampfreformierung höhere Wasserstoffgehalte im Produktgas. Die Reformierungsreaktion ist jedoch stark endotherm.

Dies wirkt sich besonders bei schnellen Lastwechseln aus, wie sie beim Betrieb von Fahrzeugen auftreten. Daher muß auf extrem gute Wärmeübergänge zwischen Reformerheizung und eigentlichem Reformer geachtet werden. Ein Absinken der Temperatur im Reformer bei schlechtem Wärmeübergang führt zu unvollständigem Umsatz und damit zu einem schlechteren Wirkungsgrad und erhöhtem Gasreinigungsaufwand. Eine übermäßige Erhöhung der Reformertemperatur führt zur Erhöhung des CO-Gehaltes im Produktgas und damit zu einem höheren Reinigungsaufwand.

In einem Gasprozessor mit Dampfreformer treten endotherme und exotherme Prozesse auf. Zu den endothermen Prozessen gehört die Verdampfung von Methanol und Wasser, die Überhitzung des Kraftstoff-Wasserdampfgemisches und die Reformierungsreaktion. Die Kraftstoffverbrennung, die Verbrennung des Anodenabgases, die Shift-Reaktion und die selektive CO-Oxidation sind exotherme Reaktionen.

Aufgabe der vorliegenden Erfindung ist es, die Wärmeenergie exothermer Prozesse in einer Brennstoffzelle endothermen Prozessen zur Verfügung zu stellen.

Die erfindungsgemäße Aufgabe wird gelöst durch den Einsatz von Latentwärmespeichern in Brennstoffzellensystemen zur Optimierung der Wärmeströme.

Überraschend wurde gefunden, daß ein plötzlich erhöhter Wärme-energiebedarf der Brennstoffzelle bei plötzlich erhöhtem Energiebedarf, z.B. durch das Gas geben im Automobil, mit einem Latentwärmespeicher abgedeckt werden kann.

Durch einen ausreichenden Brennstoffanteil im Anodengas kann die mit einem katalytischen Brenner gewonnene Wärmeenergie mit einem geeigneten Latentwärmespeicher gespeichert werden. Die nicht benötigte Wärmeenergie wird gespeichert und steht zur Verfügung, wenn ein erhöhter Wärmeenergiebedarf auftritt.

Der Latentwärmespeicher wird in einem Brennstoffzellensystem zur Temperierung des Reformers oder für den Verdampfungsprozess des Brennstoffes genutzt.

Ein Latentwärmespeicher liefert bei zunehmendem Wasserstoffbedarf verzögerungsfrei die zusätzlich im Reformer benötigte Energie und verhindert somit, daß die Temperatur des Reformierungsreaktors durch eine unzulängliche Brennerregelung absinkt.

Im umgekehrten Fall nimmt der Latentwärmespeicher bei sinkendem H₂-Bedarf überschüssige Wärme auf, die von einer verzögerten Brennerregelung herrührt. Bei zu niedriger Temperatur im Reformer ist die Reformierungsreaktion zu langsam, bei zu hohen Temperaturen würde der CO-Gehalt steigen und die Brennstoffzelle vergiften. In Brennstoffzellen können Latentwärmespeicher zur Temperierung in den Gasreiniger integriert werden.

Überraschend wurde gefunden, daß ein Latentwärmespeichersystem in einem Brennstoffzellensystem für die mobile Anwendung wie z.B. im Auto besonders geeignet ist. Automobile müssen innerhalb weniger Sekunden gestartet werden können. Dies kann durch ein Latentwärmespeichersystem zum schnellen Heizen des Reformers ermöglicht werden.

Es wurde gefunden, daß durch die Erhöhung der Brennstoffzugabe der Wärmebedarf der endothermen Prozesse in einer Brennstoffzelle abgedeckt werden kann.

Außerdem wurde gefunden, daß der Einsatz von Latentwärmespeichern das Überhitzen der Polymerelektrolyte verhindern kann.

Polymerelektrolyte wie Nafion sind sehr empfindlich gegen Austrocknung. Dies begrenzt die Einsatztemperatur auf ca. 70-80°C. Ein Überhitzen der Elektrolytfolie führt zu Wasserverlust in der Membran und damit zu einer starken lokalen Erhöhung des Widerstandes und verursacht schlimmstenfalls die Bildung von Löchern in der Membran. Ein in den Kühlkreislauf oder die Bipolarplatten integrierter Latentwärmespeicher senkt die Gefahr der lokalen Überhitzung erheblich.

Der Latentwärmespeicher wird somit in einer Brennstoffzelle zur Temperaturstabilisierung durch Pufferung des Wärmebedarfs eingesetzt.

Außerdem wurde gefunden, daß der Einsatz eines Latentwärmespeichers die Startzeit der Brennstoffzelle erheblich verkürzt.

Es wurde gefunden, daß das Lastwechselverhalten von Brennstoffzellensystemen durch den Einsatz von Latentwärmespeichern verbessert werden kann. Die Verkürzung der Zeitkonstanten der einzelnen Baugruppen ist durch einen minimalen Steuerungsaufwand zu realisieren. So kann z.B. für eine Wasserstoff-Brennstoffzelle mit Methanol-Reformer ein Latentwärmespeicher die für das Beschleunigen erforderliche zusätzliche Wärme im Reformer ohne Verzögerung liefern. Damit wird der Steuerungsaufwand auf die Erhöhung der Methanolzufuhr reduziert. Die Erhöhung der Brennerleistung kann auch etwas verzögert erfolgen. Wird z.B. der Brenner mit Anodenabgas der Brennstoffzelle beschickt kann bei geeigneter Auslegung des Speichers auf eine zusätzliche Brennstoffzufuhr verzichtet werden.

Die Verwendung von Anodenabgas zur Speisung der Brenner für Reformer und Verdampfer erhöht den Gesamtwirkungsgrad des Brennstoffzellensystems gegenüber getrennter Speisung mit Brennstoff.

Nachfolgend wird ein allgemeines Beispiel der Erfindung näher erläutert.

Für die verschiedenen Brennstoffzellensysteme sind verschiedene Latentwärmespeichersysteme notwendig, da sie bei verschiedenen Temperaturen arbeiten.

Der Methanol-Reformer einer Proton-exchange-Membran (PEM)-Brennstoffzelle arbeitet bei Temperaturen um 300°C. Ein Latentwärmespeicher zur Temperaturregelung des Brennstoff-

Reformers benötigt zwei Speichermaterialien. Ein Phasenwechselmaterial als Speichermedium hat einen Schmelzpunkt der 5°C unterhalb der optimalen Betriebstemperatur liegt und ein Material 5°C oberhalb.

Als Materialien sind alle Salze, Salzhydrate und ihre Mischungen sowie kristalline organische niedermolekulare Substanzen geeignet, deren Schmelzpunkt in den angegebenen Bereichen liegen. Besonders geeignet sind für den Methanol-Reformer einer PEM-Brennstoffzelle für den Bereich oberhalb der optimalen Betriebstemperatur FeCl₃ oder NaNO₃.

Für den Temperaturbereich unterhalb der optimalen Betriebstemperatur sind z.B. Kaliumacetat oder NaSCN besonders geeignet.

Zur Speicherung der Abwärme von Brennstoffzellen in mobilen Systemen, die beim Start des Fahrzeuges wieder eingespeist wird, sind verschiedene Materialien geeignet. Die Arbeitstemperatur einer PEM-Brennstoffzelle liegt bei 60-90°C. Hierfür sind Speichermedien wie Natriumacetat Trihydrat besonders geeignet.

In Abhangigkeit von der Art der Brennstoffzelle und damit von den Betriebstemperaturen der einzelnen Komponenten stehen dem Fachmann eine Vielzahl von geeigneten Salzen, Salzhydraten und ihre Mischungen und kristallinen organischen niedermolekularen Substanzen für die entsprechenden Latentwärmespeichersysteme zur Verfügung.

## Patentansprüche

1. Brennstoffzellensysteme enthaltend Latentwärmespeicher zur Optimierung der Wärmeströme.

2. Brennstoffzellensysteme gemäß Anspruch 1, dadurch gekennzeichnet, daß bei der Brennstoffzugabe der Wärmebedarf endothermer Prozesse mit abgedeckt wird.

3. Brennstoffzellensysteme gemäß der Ansprüche 1 und 2, dadurch gekennzeichnet, daß die Anodengase einen ausreichenden Anteil Brennstoffe enthalten, um die z.B. mit einem katalytischen Brenner gewonnene Energie in einem Latenwärmespeichersystem zu speichern.

4. Brennstoffzellensysteme gemäß der Ansprüche 1 bis 3, dadurch gekennzeichnet, daß die im Latentwärmespeicher gespeicherte Wärmeenergie zur Temperierung des Reformers genutzt wird.

5. Brennstoffzellensysteme gemäß der Ansprüche 1 bis 4, dadurch gekennzeichnet, daß die im Latentwärmespeicher gespeicherte Wärmeenergie zur Verdampfung des Brennstoffes genutzt wird.

6. Brennstoffzellensysteme gemäß der Ansprüche 1 bis 5, dadurch gekennzeichnet, daß verschiedene Latentwärmespeichersysteme eingesetzt werden.

7. Brennstoffzellensysteme gemäß der Ansprüche 1 bis 6, dadurch gekennzeichnet, daß Latentwärmespeicher in den Reformer integriert werden.

8. Brennstoffzellensysteme gemäß der Ansprüche 1 bis 7, dadurch gekennzeichnet, daß Latentwärmespeicher in den Gasreiniger integriert werden.

9. Brennstoffzelle gemäß der Ansprüche 1 bis 8, dadurch gekennzeichnet, daß Latentwärmespeicher in Bipolarplatten integriert werden.

10. Brennstoffzellen gemäß Anspruch 1 bis 9, dadurch gekennzeichnet, daß Latentwärmespeicher in den Kühlkreislauf integriert werden.

11. Verwendung von Latentwärmespeichern in Brennstoffzellensystemen zur Optimierung der Wärmeströme.

12. Verwendung von Latentwärmespeichern in Brennstoffzellensystemen zur Temperaturstabilisierung durch Pufferung des Wärmebedarfs.

13. Verwendung von Latentwärmespeichern in Brennstoffzellensystemen für mobile Systeme.

14. Verwendung von Latentwärmespeichern zur Speicherung der Abwärme von Brennstoffzellen in mobilen Systemen zur Einspeisung der gespeicherten Energie beim Start des Fahrzeuges.
